# EUROPÄISCHE PATENTSCHRIFT

(11) **EP 3 303 840 B1**
(45) Veröffentlichungstag und Bekanntmachung des Hinweises auf die Patenterteilung: **05.06.2019**
(21) Anmeldenummer: 16706670.3
(22) Anmeldetag: 29.02.2016
(51) Int. Cl.: F04B 53/00, F04B 39/00, F16F 15/08

(54) **KÄLTEMITTELVERDICHTER**
COOLANT COMPRESSOR
COMPRESSEUR À RÉFRIGÉRANT

(30) Priorität: 27.05.2015 AT 500982015 U
(43) Veröffentlichungstag der Anmeldung: 11.04.2018
(73) Patentinhaber: Nidec Global Appliance Germany GmbH, 24939 Flensburg (DE)
(72) Erfinder: RESCH, Reinhard, 8330 Feldbach (AT)
(74) Vertreter: KLIMENT & HENHAPEL
(86) Internationale Anmeldenummer: PCT/EP2016/054233
(87) Internationale Veröffentlichungsnummer: WO 2016/188643

(56) Entgegenhaltungen:
- US-A- 6 029 942
- US-A1- 2004 170 508
- US-A1- 2005 169 775

## Beschreibung

### GEBIET DER ERFINDUNG

Die vorliegende Erfindung betrifft einen Kältemittelverdichter umfassend ein hermetisch dichtes Gehäuse sowie eine im Inneren des Gehäuses angeordnete Antriebseinheit mit einer Kolben-Zylinder-Einheit zur zyklischen Verdichtung eines Kältemittels und einem Elektromotor zum Antrieb der Kolben-Zylinder-Einheit, wobei der Kältemittelverdichter weiters mindestens ein Verbindungsbauteil zur Anbindung des Gehäuses an eine mit dem Kältemittelverdichter in Wirkverbindung stehende Vorrichtung, vorzugsweise an eine Montageplatte eines Kühlgerätes, umfasst, wobei das Verbindungsbauteil ein inneres Element und ein das innere Element umgebendes äußeres Element umfasst, wobei das innere Element eine höhere Steifigkeit als das äußere Element aufweist, wobei im äußeren Element Freistellungen vorgesehen sind, die in Querrichtungen verlaufen, wobei die Querrichtungen von einer äußeren Hüllfläche des äußeren Elements zum inneren Element weisen.

### STAND DER TECHNIK

Gemäß dem Stand der Technik werden zur schwingungstechnischen Entkopplung eines Kältemittelverdichters von einer mit dem Kältemittelverdichter in Wirkverbindung stehenden Vorrichtung, insbesondere von einem Kühlgerät, Verbindungsbauteile verwendet. Dabei ist ein Gehäuse des Kältemittelverdichters über die Verbindungsbauteile an die Vorrichtung angebunden bzw. mit dieser verbunden. Die Verbindungsbauteile umfassen üblicherweise eine Hülse, insbesondere aus Metall, welche radial von einem Gummielement mit einer typischen Härte von 40 bis 50 Shore A umgeben ist.

Gummi weist eine Reihe von Nachteilen auf, die die Schwingungsentkopplung, insbesondere bei Querbelastung der Verbindungsbauteile, negativ beeinflussen. Vor allem die hohe dynamische Steifigkeit von Gummi und dessen Inkompressibilität in Verbindung mit der Art der Montage, die u.a. eine hohe Quersteifigkeit des Verbindungsbauteils bewirkt, machen eine hinreichend gute Schwingungsentkopplung, speziell bei niedrigen Frequenzen, nahezu unmöglich.

Andererseits wird Gummi trotzdem aus Kostengründen eingesetzt. Insbesondere bei Massenprodukten, wie z.B. Kühlgeräten, ist der Kostendruck enorm groß, weshalb Gummi bevorzugt als Material verwendet wird.

Aus der US 2004/170508 A1 ist ein Kältemittelverdichter bekannt, der über eine Vibrationen absorbierende Vorrichtung an einer Struktur (z.B. eines Kühlschranks) befestigt ist, wobei die Vorrichtung ein inneres Element umfasst sowie ein äußeres elastisches Element. Das elastische Element weist Freistellungen auf, die umfänglich verlaufen, also rotationssymmetrisch um die Längsachse des Verbindungsbauteils sind.

Aus der US 2005/169775 A1 ist ein Verbindungsbauteil eines Kältemittelverdichters zu einem Basisteil bekannt. Das Verbindungsbauteil weist einen oberen Abschnitt sowie einen unteren Abschnitt auf, die durch drei Verbindungsabschnitte miteinander verbunden sind, wodurch eine Art Käfig ausgebildet wird. In diesem Käfig ist eine Feder aufgenommen, wobei die Verbindungsabschnitte eine verbesserte Fixierung der Feder ermöglichen.

Aus der US 6029942 A ist ein Verbindungsbauteil für die Montage eines Kompressors auf einer Montageplatte bekannt, wobei das Verbindungsbauteil eine leichte, schnelle Montage sowie eine gute Vibrationsdämpfung ermöglichen soll. Hierzu weist die Montageplatte stiftförmige abstehende Teile auf, über die Gummitüllen geschoben werden. Die Gummitüllen können Freistellungen aufweisen, die umfänglich bzw. rotationssymmetrisch um die Längsachse der Verbindungsbauteile verlaufen.

### AUFGABE DER ERFINDUNG

Es ist daher Aufgabe der vorliegenden Erfindung einen Kältemittelverdichter mit einem Verbindungsbauteil zur Verfügung zu stellen, das eine verbesserte Schwingungsentkopplung zwischen dem Kältemittelverdichter und der mit dem Kältemittelverdichter in Wirkverbindung stehenden Vorrichtung erlaubt. Insbesondere soll durch das erfindungsgemäße Verbindungsbauteil die Möglichkeit geschaffen werden, günstige Materialien einzusetzen und trotzdem dieselben oder zumindest annähernd dieselben Eigenschaften von Verbindungsbauteilen, in welchen teurere Materialen verbaut sind, zu erzielen.

### DARSTELLUNG DER ERFINDUNG

Kern der Erfindung zur Lösung der oben genannten Aufgabe ist es, bei einem Verbindungsbauteil eines Kältemittelverdichters, das ein inneres Element und ein das innere Element umgebendes äußeres Element aufweist, durch geeignete geometrische Auslegung des Verbindungsbauteils einerseits die dynamische Steifigkeit des äußeren Elements und andererseits die Quersteifigkeit des Verbindungsbauteils insgesamt gezielt zu reduzieren, um eine verbesserte Schwingungsentkopplung zu ermöglichen. Bei einem Kältemittelverdichter umfassend ein hermetisch dichtes Gehäuse sowie eine im Inneren des Gehäuses angeordnete Antriebseinheit mit einer Kolben-Zylinder-Einheit zur zyklischen Verdichtung eines Kältemittels und einem Elektromotor zum Antrieb der Kolben-Zylinder-Einheit, wobei der Kältemittelverdichter weiters mindestens ein Verbindungsbauteil zur Anbindung des Gehäuses an eine mit dem Kältemittelverdichter in Wirkverbindung stehende Vorrichtung, vorzugsweise an eine Montageplatte eines Kühlgerätes, umfasst, wobei das Verbindungsbauteil ein inneres Element und ein das innere Element umgebendes äußeres Element umfasst, wobei das innere Element eine höhere Steifigkeit als das äußere Element aufweist, ist vorgesehen, dass im äußeren Element Freistellungen vorgesehen sind, die in Querrichtungen verlaufen, wobei die Querrichtungen von einer äußeren Hüllfläche des äußeren Elements zum inneren Element weisen.

Bei der äußeren Hüllfläche des äußeren Elements kann es sich um eine Außenfläche des äußeren Elements oder um eine die Außenfläche umhüllende Fläche handeln.

Bei viskoelastischen Werkstoffen wie Gummi bestimmt der Formfaktor neben Materialeigenschaften wie der Shore Härte die effektive Steifigkeit des Bauteils. Die Freistellungen bewirken eine Vergrößerung der freien Oberfläche des äußeren Elements und verringern somit dessen Formfaktor, ohne dass Druckspannungen und somit eine Setzung des äußeren Elements wesentlich vergrößert werden. Der Formfaktor ist dabei durch das Verhältnis zwischen der krafteinleitenden Oberfläche und der freien Oberfläche bestimmt. Somit ergibt sich eine reduzierte dynamische Steifigkeit des äußeren Elements. Eine Verringerung des Formfaktors bewirkt wiederum eine Verringerung der dynamischen Steifigkeit.

Es sei bemerkt, dass durch die Freistellungen die Schubverformbarkeit des äußeren Elements besser zur Schwingungsentkoppelung ausgenutzt werden kann.

Um die freie Oberfläche besonders groß zu gestalten, ist es erfindungsgemäß vorgesehen, dass die Freistellungen in einer axialen Richtung das gesamte äußere Element durchsetzen. Die axiale Richtung ist dabei jene Richtung, in der das Verbindungsbauteil auf Druck belastet wird. Vorzugsweise ist eine Längsachse des Verbindungsbauteils parallel zur axialen Richtung.

Zur einfachen Erzeugung der Freistellungen ist es bei einer bevorzugten Ausführungsform des erfindungsgemäßen Kältemittelverdichters vorgesehen, dass die Freistellungen als Schlitze ausgebildet sind.

Um eine besonders einfache Erzeugung der Freistellungen zu ermöglichen, ist es bei einer bevorzugten Ausführungsform des erfindungsgemäßen Kältemittelverdichters vorgesehen, dass die Freistellungen nach außen hin offen sind. In diesem Fall fällt die Außenfläche des äußeren Elements mit dessen Hüllfläche nicht zusammen, sondern wird von der Hüllfläche umhüllt. Vorzugsweise sind die Freistellungen dabei nach innen hin von der Außenseite des äußeren Elements begrenzt. Vorzugsweise sind die Freistellungen dabei parallel zu den Querrichtungen gesehen nach außen hin offen.

Um unerwünschte Richtungsabhängigkeiten der dynamischen Steifigkeit des äußeren Elements zu vermeiden, ist es bei einer bevorzugten Ausführungsform des erfindungsgemäßen Kältemittelverdichters vorgesehen, dass die Freistellungen regelmäßig, vorzugsweise mit gleichem Winkelabstand zueinander, um eine Längsachse des Verbindungsbauteils herum angeordnet sind. Insbesondere zeigt sich diese regelmäßige Anordnung in einer Schnittebene normal auf die Längsachse, wobei die Längsachse, wie bereits erwähnt, vorzugsweise parallel zur axialen Richtung verläuft.

In aufwendigen Versuchen hat sich gezeigt, dass ein besonders gleichmäßiges Ansprechen des Verbindungsbauteils auf Belastungen, insbesondere quer zur axialen Richtung, erzielt werden kann, wenn der Winkelabstand zwischen den Freistellungen in einem Bereich zwischen 3° und 45° gehalten werden kann. Entsprechend ist es bei einer bevorzugten Ausführungsform des erfindungsgemäßen Kältemittelverdichters vorgesehen, dass die Freistellungen einen Winkelabstand von 3° bis 45°, vorzugsweise von 5° bis 30° zueinander aufweisen.

Generell sind die angegebenen Grenzwerte von Intervallen/Bereichen als zum jeweiligen Intervall/Bereich dazu gehörend zu verstehen, sofern nichts Gegenteiliges explizit angegeben ist.

Dabei ist es bei einer bevorzugten Ausführungsform des erfindungsgemäßen Kältemittelverdichters vorgesehen, dass die Freistellungen jeweils einen Winkelbereich von mindestens 1° bis 10°, vorzugsweise von 1° bis 4° überdecken.

Bei einer bevorzugten Ausführungsform des erfindungsgemäßen Kältemittelverdichters ist es vorgesehen, dass das Verbindungsbauteil mindestens eine weitere Freistellung aufweist, die zwischen dem inneren Element und dem äußeren Element angeordnet ist. Die mindestens eine weitere Freistellung erlaubt eine bessere Ausnutzung der Schubverformbarkeit des äußeren Elements, da sich das äußere Element bei Querbelastung so verformen kann, dass Teile des äußeren Elements sich in die mindestens eine weitere Freistellung bewegen können. Durch das Zusammenwirken der Freistellungen mit der mindestens einen weiteren Freistellung wird die Quersteifigkeit des äußeren Elements bzw. des Verbindungsbauteils zur Schwingungsentkopplung zwischen Gehäuse und Vorrichtung besonders effektiv reduziert.

Entsprechend ist es bei einer bevorzugten Ausführungsform des erfindungsgemäßen Kältemittelverdichters vorgesehen, dass die mindestens eine weitere Freistellung in einem unbelasteten Zustand des Verbindungsbauteils frei ist und in einem belasteten Zustand des Verbindungsbauteils zumindest abschnittsweise vom äußeren Element ausgefüllt ist.

Um trotz der mindestens einen weiteren Freistellung einen zentrierten Sitz, insbesondere Presssitz des äußeren Elements auf dem inneren Element zu ermöglichen, ist es bei einer bevorzugten Ausführungsform des erfindungsgemäßen Kältemittelverdichters vorgesehen, dass die mindestens eine weitere Freistellung in einer axialen Richtung eine Erstreckung aufweist, die kleiner ist als eine Erstreckung des äußeren Elements in axialer Richtung. Entsprechend begrenzt das äußere Element mit mindestens einem Abschnitt die mindestens eine weitere Freistellung in axialer Richtung gesehen zumindest von einer Seite und kontaktiert das innere Element mit diesem Abschnitt.

Weiters ist es bei einer bevorzugten Ausführungsform des erfindungsgemäßen Kältemittelverdichters vorgesehen, dass mehrere weitere Freistellungen vorgesehen sind, die in einer normal auf eine axiale Richtung stehenden Schnittebene durch Stege des äußeren Elements voneinander getrennt sind. Durch die Stege wird ein zentrierter Sitz des äußeren Elements auf dem inneren Element über im Wesentlichen die gesamte axiale Erstreckung des äußeren Elements sichergestellt. Dabei sind Ausführungsvarianten denkbar, bei denen die Freistellungen bis in die Stege reichen.

Um die Quersteifigkeit des Verbindungsbauteils in diesem Fall gleichmäßig, d.h. ohne unerwünschte Richtungsabhängigkeit, zu erniedrigen, ist es bei einer bevorzugten Ausführungsform des erfindungsgemäßen Kältemittelverdichters vorgesehen, dass die weiteren Freistellungen in der Schnittebene regelmäßig, vorzugsweise mit gleichem Winkelabstand zueinander, um eine Längsachse des Verbindungsbauteils herum angeordnet sind. Wie bereits erwähnt, verläuft die Längsachse vorzugsweise parallel zur axialen Richtung.

In aufwendigen Versuchen hat sich gezeigt, dass ein besonders gleichmäßiges Ansprechen des Verbindungsbauteils auf Belastungen quer zur axialen Richtung erzielt werden kann, wenn der Winkelabstand zwischen den weiteren Freistellungen in einem Bereich zwischen 3° und 45° gehalten werden kann. Entsprechend ist es bei einer bevorzugten Ausführungsform des erfindungsgemäßen Kältemittelverdichters vorgesehen, dass die weiteren Freistellungen in der Schnittebene einen Winkelabstand von 3° bis 45°, vorzugsweise von 5° bis 30° zueinander aufweisen. Dieser Winkelabstand entspricht dem von jeweils einem Steg überdeckten Winkelbereich.

Dabei ist es bei einer bevorzugten Ausführungsform des erfindungsgemäßen Kältemittelverdichters vorgesehen, dass die weiteren Freistellungen in der Schnittebene jeweils einen Winkelbereich von 10° bis 40° überdecken, um eine hinreichend große Reduktion der Quersteifigkeit des Verbindungsbauteils zu erzielen.

Um ein Befestigungsmittel, wie z.B. eine Schraube oder einen Bolzen, durch das Verbindungsbauteil durchführen zu können, ist es bei einer bevorzugten Ausführungsform des erfindungsgemäßen Kältemittelverdichters vorgesehen, dass das innere Element hülsenförmig ausgebildet ist. Somit kann das Verbindungsbauteil mit dem Befestigungsmittel auf einfache Art und Weise mit dem Gehäuse oder der Vorrichtung verbunden, insbesondere verschraubt werden. Dabei verhindert das innere Element, dass sich das äußere Element bei angezogener Schraube setzt.

Um ein mechanisch besonders stabiles und gleichzeitig einfach und kostengünstig herstellbares inneres Element zu gewährleisten, ist es bei einer bevorzugten Ausführungsform des erfindungsgemäßen Kältemittelverdichters vorgesehen, dass das innere Element aus Metall, z.B. Stahl gefertigt ist.

Vorzugsweise ist das äußere Element elastisch und besonders bevorzugt wenig bis gar nicht kompressibel. Entsprechend ist es bei einer bevorzugten Ausführungsform des erfindungsgemäßen Kältemittelverdichters vorgesehen, dass das äußere Element aus Gummi oder einem Elastomer gefertigt ist. Dabei kann Gummi sowohl aus einem natürlichen als auch aus einem synthetischen Material, insbesondere Kautschuk, hergestellt sein. Das Elastomer ist vorzugsweise wenig bis gar nicht kompressibel.

Weiters ist es bei einer bevorzugten Ausführungsform des erfindungsgemäßen Kältemittelverdichters vorgesehen, dass zur Befestigung des mindestens einen Verbindungsbauteils am Gehäuse ein Anbaufuß vorgesehen ist, welcher das äußere Element in einem Verbindungsabschnitt des äußeren Elements umgibt. Der Anbaufuß ermöglicht dabei eine große Flexibilität in der Positionierung des Gehäuses relativ zur Vorrichtung.

Bei einer besonders bevorzugten Ausführungsform des erfindungsgemäßen Kältemittelverdichters ist es vorgesehen, dass, der Verbindungsabschnitt mit der mindestens einen weiteren Freistellung in axialer Richtung überlappt. Durch die Überlappung des Verbindungsabschnitts mit der mindestens einen weiteren Freistellung wird sichergestellt, dass bei einer Belastung in Querrichtung, d.h. quer zur axialen Richtung, die Schubverformbarkeit des äußeren Elements möglichst effizient ausgenutzt wird und das äußere Element in die mindestens eine weitere Freistellung ausweicht bzw. ausweichen kann.

Um insbesondere in axialer Richtung eine definierte Positionierung des Anbaufußes dauerhaft zu gewährleisten, ist es bei einer bevorzugten Ausführungsform des erfindungsgemäßen Kältemittelverdichters vorgesehen, dass der Anbaufuß in einer Nut des äußeren Elements aufgenommen ist.

Schließlich ist analog zum oben Gesagten erfindungsgemäß auch ein System vorgesehen, umfassend einen erfindungsgemäßen Kältemittelverdichter sowie eine mit dem Kältemittelverdichter in Wirkverbindung stehende Vorrichtung, vorzugsweise ein Kühlgerät, wobei die Vorrichtung eine Montageplatte umfasst, an welche das Gehäuse des Kältemittelverdichters mit dem mindestens einen Verbindungsbauteil angebunden ist.

### KURZE BESCHREIBUNG DER FIGUREN

Die Erfindung wird nun anhand von Ausführungsbeispielen näher erläutert. Die Zeichnungen sind beispielhaft und sollen den Erfindungsgedanken zwar darlegen, ihn aber keinesfalls einengen oder gar abschließend wiedergeben.

Dabei zeigt:
- Fig. 1: eine Seitenansicht eines erfindungsgemäßen Kältemittelverdichters
- Fig. 2: eine Schnittansicht durch ein erfindungsgemäßes Verbindungsbauteil des Kältemittelverdichters gemäß der Schnittlinie A-A in Fig. 1, wobei die Pfeile die Blickrichtung andeuten
- Fig. 3: eine Schnittansicht des erfindungsgemäße Verbindungsbauteils gemäß der Schnittlinie B-B in Fig. 2, wobei die Pfeile die Blickrichtung andeuten
- Fig. 4: eine Schnittansicht wie Fig. 3 für eine weitere Ausführungsform des erfindungsgemäßen Verbindungsbauteils
- Fig. 5: eine axonometrische Ansicht eines äußeren Elements aus Fig. 4

### WEGE ZUR AUSFÜHRUNG DER ERFINDUNG

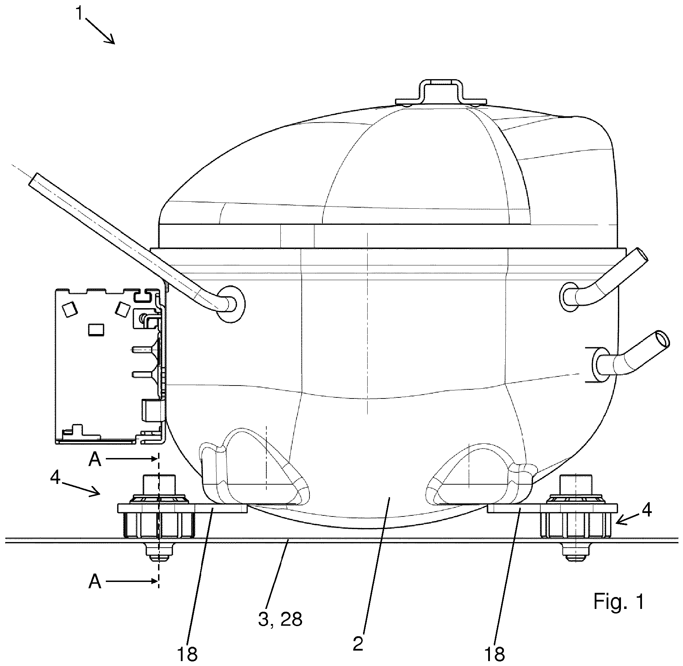

In der Seitenansicht der Fig. 1 ist ein erfindungsgemäßer Kältemittelverdichter 1 mit einem Gehäuse 2 zu sehen, wobei im Inneren des Gehäuses 2 eine Antriebseinheit mit einer Kolben-Zylinder-Einheit zur zyklischen Verdichtung eines Kältemittels und einem Elektromotor zum Antrieb der Kolben-Zylinder-Einheit vorgesehen ist (nicht dargestellt). Das Gehäuse 2 ist über erfindungsgemäße Verbindungsbauteile 4 mit einer Montageplatte 28 eines Kühlgerätes 3 verbunden, mit welchem der Kältemittelverdichter 1 in Wirkverbindung steht. Um ein einfaches Positionieren des Gehäuses 2 bzw. des Kältemittelverdichters 1 relativ zum Kühlgerät 3 bzw. zur Montagplatte 28 zu ermöglichen, weisen die Verbindungsbauteile 4 Anbaufüße 18 auf, die mit dem Gehäuse 2 verbunden sind.

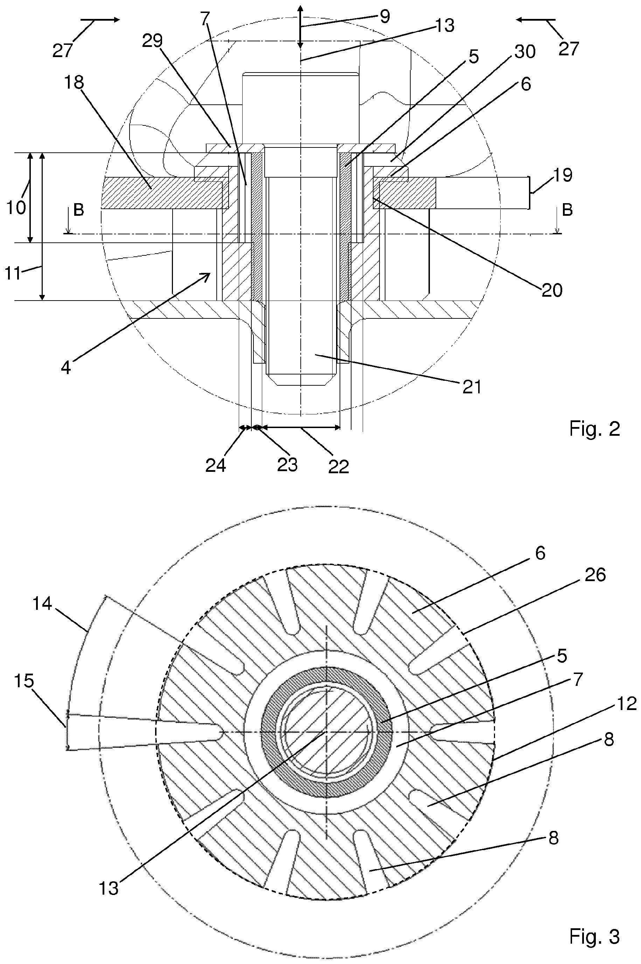

Fig. 2 zeigt eine Schnittansicht durch ein erfindungsgemäßes Verbindungsbauteil 4 gemäß der Schnittlinie A-A in Fig. 1, wobei die Pfeile die Blickrichtung andeuten und eine Längsachse 13 des Verbindungsbauteils 4 in der Schnittebene liegt. Das Verbindungsbauteil 4 umfasst ein inneres Element 5 und ein das innere Element 5 umgebendes äußeres Element 6. Das innere Element 5 ist hülsenförmig ausgeführt, was die Durchführung einer Schraube 21 ermöglicht, mit welcher Schraube 21 das Verbindungsbauteil 4 an der Montageplatte 28 befestigt ist. Dabei ist zwischen einem Kopf der Schraube 21 und dem Verbindungsbauteil 4 eine Beilagscheibe 29 vorgesehen. Das innere Element 5 weist entsprechend einen lichten Innendurchmesser 22 auf, der hinreichend Platz für die Aufnahme der Schraube 21 lässt. Beispielsweise beträgt der Innendurchmesser 22 6,5 mm bis 8,7 mm.

Das innere Element 5 weist eine gegenüber dem äußeren Element 6 erhöhte Steifigkeit auf und verhindert so ein Setzen des äußeren Elements 6. Vorzugsweise ist das innere Element 5 zu diesem Zweck aus Metall, z.B. Stahl oder Edelstahl gefertigt. Entsprechend gering kann eine Wandstärke 23 des inneren Elements 5 ausfallen, beispielsweise 0,85 mm bis 1,2 mm. Das äußere Element 6 ist vorzugsweise aus Gummi oder einem Elastomer gefertigt. Vorzugsweise weist das äußere Element 6 eine niedrige oder gar keine Kompressibilität auf.

Der Anbaufuß 18 umschließt das äußere Element 6 in einem Verbindungsabschnitt 19 des äußeren Elements 6. Um insbesondere in einer axialen Richtung 9 eine definierte Positionierung des Anbaufußes 18 dauerhaft zu gewährleisten, ist der Anbaufuß 18 in einer Nut 20 des äußeren Elements 6 aufgenommen, wobei die Nut 20 vorzugsweise radial verläuft. Die axiale Richtung 9 ist dabei jene Richtung, in der das Verbindungsbauteil 4 auf Druck belastet wird. Vorzugsweise ist die Längsachse 13 des Verbindungsbauteils 4 parallel zur axialen Richtung 9.

Bei Querbelastung, d.h. bei einer Schwingung des Gehäuses 2 in Querrichtungen 27, die quer, vorzugsweise normal zur axialen Richtung 9 stehen, schränken das innere Element 5 sowie der das äußere Element 6 umgebende Anbaufuß 18 eine Schubverformung des äußeren Elements 6 grundsätzlich ein. Insbesondere kommt hierbei eine geringe Kompressibilität oder Inkompressibilität des äußeren Elements 6 zu tragen. Um dennoch eine möglichst geringe Quersteifigkeit des Verbindungsbauteils 4 zu realisieren, die insbesondere eine gute Schwingungsentkopplung des Gehäuses 2 vom Kühlgerät 3 zulässt, weist das Verbindungsbauteil 4 Freistellungen in Form von Schlitzen 8 auf. Um die Quersteifigkeit weiter zu verringern, weist das Verbindungsbauteil 4 in den gezeigten Ausführungsbeispielen außerdem mindestens eine weitere Freistellung 7 auf.

Die mindestens eine weitere Freistellung 7 ist dabei in Querrichtung 27 gesehen zwischen dem inneren Element 5 und dem äußeren Element 6 angeordnet. Dabei weist die mindestens eine weitere Freistellung 7 in Querrichtung 27 eine Erstreckung 24 auf, die z.B. 0,5 mm bis 2 mm betragen kann.

Die Schlitze 8 sind im äußeren Element 6 vorgesehen und verlaufen jeweils entlang der Querrichtungen 27, wobei die Querrichtungen 27 grundsätzlich von einer äußeren Hüllfläche 26 des äußeren Elements 6 zum inneren Element 5 weisen. In den gezeigten Ausführungsbeispielen weisen die Querrichtungen auch von der äußeren Hüllfläche 26 zu einem Zentrum, das durch die Längsachse 13 gebildet ist. D.h. die Schlitze 8 sind in Querrichtung 27 gesehen außerhalb des inneren Elements 5 angeordnet.

Wie in der Schnittansicht der Fig. 3 erkennbar ist, sind die Schlitze 8 in der gezeigten Ausführungsform auch vollständig außerhalb der weiteren Freistellung 7 angeordnet. In den gezeigten Ausführungsbeispielen sind die Schlitze 8 parallel zu den Querrichtungen 27 gesehen nach außen hin offen. Daher ist die äußere Hüllfläche 26 nicht durch eine Außenseite 12 des äußeren Elements 6 gebildet, sondern umhüllt die Außenseite 12. In der Schnittansicht der Fig. 3 ist dies gut erkennbar, wobei die äußere Hüllfläche 26 strichliert angedeutet ist.

Die radialen Schlitze 8 bewirken eine Vergrößerung der freien Oberfläche des äußeren Elements 6 und verringern somit dessen Formfaktor, ohne dass Druckspannungen und somit eine Setzung des äußeren Elements 6 vergrößert werden. Der Formfaktor ist dabei durch das Verhältnis zwischen der krafteinleitenden Oberfläche und der freien Oberfläche bestimmt. Der reduzierte Formfaktor reduziert die dynamische Steifigkeit des äußeren Elements 6 und damit des Verbindungsbauteils 4.

Die mindestens eine weitere Freistellung 7 wiederum erlaubt eine bessere Ausnutzung der Schubverformbarkeit des äußeren Elements 6, da sich das äußere Element 6 bei Querbelastung so verformen kann, dass Teile des äußeren Elements 6 sich in die mindestens eine weitere Freistellung 7 bewegen können. D.h. die mindestens eine weitere Freistellung 7 ist in einem unbelasteten Zustand des Verbindungsbauteils 4 frei und in einem belasteten Zustand zumindest abschnittsweise vom äußeren Element 6 ausgefüllt (nicht dargestellt).

Durch das Zusammenwirken der Schlitze 8 mit der mindestens einen weiteren Freistellung 7 wird die Quersteifigkeit des äußeren Elements 6 bzw. des Verbindungsbauteils 4 zur Schwingungsentkopplung zwischen Gehäuse 2 und Kühlgerät 3 besonders gut reduziert.

Wie in Fig. 2 ersichtlich ist, weist die mindestens eine weitere Freistellung 7 in axialer Richtung 9 eine axiale Erstreckung 10 auf, die kleiner als eine axiale Erstreckung 11 des äußeren Elements 6 in axialer Richtung 9 ist. Das äußere Element 6 kann somit problemlos mittels Presssitz auf dem inneren Element 5 gehalten werden.

Die Schlitze 8 hingegen durchsetzen das äußere Element 6 entlang von dessen gesamter axialer Erstreckung 11, um die freie Oberfläche des äußeren Elements 6 zu maximieren. Die radialen Schlitze 8 bewirken eine Vergrößerung der freien Oberfläche des äußeren Elements 6 und verringern somit dessen Formfaktor, ohne dass Druckspannungen und somit eine Setzung des äußeren Elements 6 wesentlich vergrößert werden.

In der in Fig. 3 gezeigten Schnittebene, die normal auf die axiale Richtung 9 bzw. auf die Längsachse 13 steht, sind die Schlitze 8 regelmäßig um die Längsachse 13 angeordnet, um keine unerwünschte Richtungsabhängigkeit (parallel zu den Querrichtungen 27) der dynamischen Steifigkeit des äußeren Elements 6 zu erzeugen. Dabei weisen in einer Drehrichtung um die Längsachse 13 jeweils zwei unmittelbar aufeinander folgende Schlitze 8 immer den gleichen Winkelabstand 14 auf, der typischerweise zwischen 3° und 45°, vorzugsweise zwischen 5° und 30° liegt. Im Ausführungsbeispiel der Fig. 3 beträgt der Winkelabstand 14 ca. 28°.

Jeder Schlitz 8 überdeckt dabei einen Winkelbereich 15, der typischerweise zwischen 1° und 10°, vorzugsweise zwischen 1° und 4° liegt. Im Ausführungsbeispiel der Fig. 3 beträgt der Winkelbereich 15 ca. 8°. Insgesamt sind im Ausführungsbeispiel der Fig. 3 zehn radiale Schlitze 8 vorhanden.

Die Randwerte der angegebenen Intervalle sind dabei stets als zu den Intervallen gehörend zu verstehen.

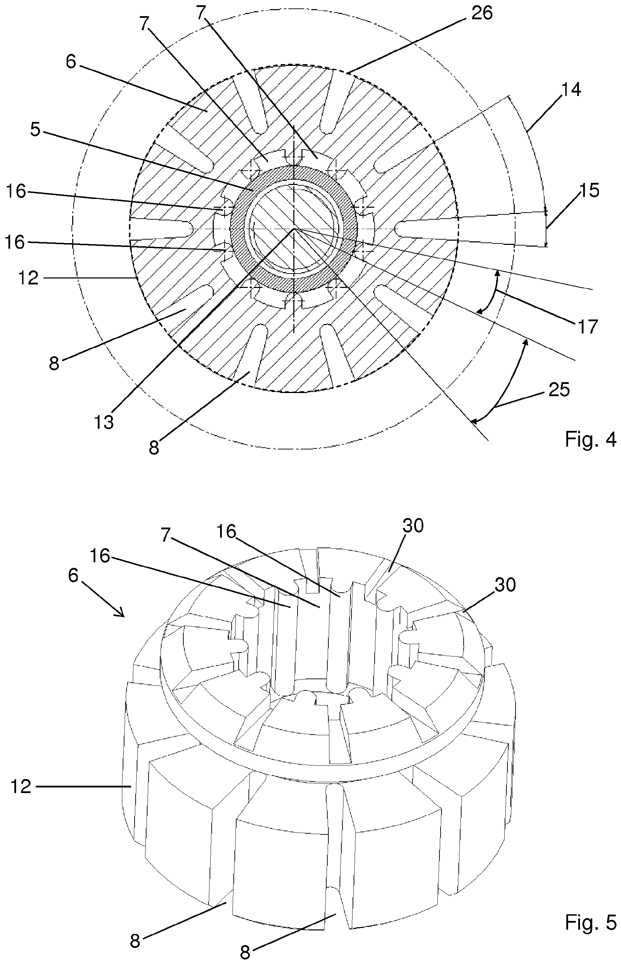

Fig. 4 zeigt eine zur Fig. 3 korrespondierende Schnittansicht eines Verbindungsbauteils 4 einer weiteren Ausführungsform des erfindungsgemäßen Kältemittelverdichters 1. Im Gegensatz zur Ausführungsform der Fig. 3 sind in der Ausführungsform der Fig. 4 mehrere, konkret zehn weitere Freistellungen 7 vorgesehen, die auf einem Kreis rund um die Längsachse 13 angeordnet sind. Jeweils zwei aufeinander folgende weitere Freistellungen 7 sind dabei durch einen Steg 16 des äußeren Elements 6 getrennt. Mit den Stegen 16 kontaktiert das äußere Element 6 das innere Element 5, wodurch eine besonders stabil zentrierte Anordnung des äußeren Elements 6 zum inneren Element 5 garantiert ist, ohne eine zu hohe Quersteifigkeit zu erzeugen.

Um keine unerwünschte Richtungsabhängigkeit der Quersteifigkeit zu bewirken, sind die weiteren Freistellungen 7 regelmäßig rund um die Längsachse 13 angeordnet, wobei ein Winkelabstand 17 von jeweils zwei unmittelbar aufeinander folgenden weiteren Freistellungen 7 konstant ist. Typischerweise beträgt der Winkelabstand 17 zwischen 3° und 45°. Im Ausführungsbeispiel der Fig. 4 beträgt der Winkelabstand 17 ca. 9°. Der Winkelabstand 17 entspricht klarerweise einem Winkelbereich, der von jeweils einem Steg 16 überdeckt wird. Jede weitere Freistellung 7 wiederum überdeckt einen Winkelbereich 25, der typischerweise zwischen 10° und 40° liegt. Bei sehr schmalen Stegen 16 wäre es aber durchaus denkbar auch einen Winkelbereich 25 von weniger als 10° vorzusehen, da in diesem Fall eine größere Anzahl von Stegen 16 möglich bzw. für die Zentrierung nötig ist. Im Ausführungsbeispiel der Fig. 4 beträgt der Winkelbereich 25 ca. 36°.

In der axonometrischen Ansicht der Fig. 5 ist erkennbar, dass ein axiales Ende des äußeren Elements 6 zusätzliche Ausnehmungen 30 aufweist, die auch in Fig. 2 erkennbar sind. Diese zusätzlichen Ausnehmungen 30 sind in axialer Richtung 9 nach oben hin offen und vergrößern ebenfalls die freie Oberfläche des Elements 6, womit die dynamische Steifigkeit des äußeren Elements 6 weiter reduziert wird.

### BEZUGSZEICHENLISTE

- 1: Kältemittelverdichter
- 2: Gehäuse
- 3: Kühlgerät
- 4: Verbindungsbauteil
- 5: Inneres Element
- 6: Äußeres Element
- 7: Weitere Freistellung
- 8: Schlitz
- 9: Axiale Richtung
- 10: Axiale Erstreckung der weiteren Freistellung
- 11: Axiale Erstreckung des äußeren Elements
- 12: Außenseite des äußeren Elements
- 13: Längsachse des Verbindungsbauteils
- 14: Winkelabstand von Schlitzen
- 15: Von einem Schlitz überdeckter Winkelbereich
- 16: Steg
- 17: Winkelabstand von weiteren Freistellungen
- 18: Anbaufuß
- 19: Verbindungsabschnitt des äußeren Elements
- 20: Nut des äußeren Elements zur Aufnahme des Anbaufußes
- 21: Schraube
- 22: Innendurchmesser des inneren Elements
- 23: Wandstärke des inneren Elements
- 24: Erstreckung der weiteren Freistellung in Querrichtung
- 25: Von einer weiteren Freistellung überdeckter Winkelbereich
- 26: Äußere Hüllfläche des äußeren Elements
- 27: Querrichtung
- 28: Montageplatte
- 29: Beilagscheibe
- 30: Zusätzliche Ausnehmung

## Patentansprüche

1. Kältemittelverdichter (1) umfassend ein hermetisch dichtes Gehäuse (2) sowie eine im Inneren des Gehäuses (2) angeordnete Antriebseinheit mit einer Kolben-Zylinder-Einheit zur zyklischen Verdichtung eines Kältemittels und einem Elektromotor zum Antrieb der Kolben-Zylinder-Einheit, wobei der Kältemittelverdichter (1) weiters mindestens ein Verbindungsbauteil (4) zur Anbindung des Gehäuses (2) an eine mit dem Kältemittelverdichter (1) in Wirkverbindung stehende Vorrichtung, vorzugsweise an eine Montageplatte (28) eines Kühlgerätes (3), umfasst,
wobei das Verbindungsbauteil (4) ein inneres Element (5) und ein das innere Element (5) umgebendes äußeres Element (6) umfasst, wobei das innere Element (5) eine höhere Steifigkeit als das äußere Element (6) aufweist, wobei im äußeren Element (6) Freistellungen (8) vorgesehen sind, die in Querrichtungen (27) verlaufen, wobei die Querrichtungen (27) von einer äußeren Hüllfläche (26) des äußeren Elements (6) zum inneren Element (5) weisen, **dadurch gekennzeichnet, dass** die Freistellungen (8) in einer axialen Richtung (9) das gesamte äußere Element (6) durchsetzen.

2. Kältemittelverdichter (1) nach Anspruch 1, **dadurch gekennzeichnet, dass** die Freistellungen als Schlitze (8) ausgebildet sind.

3. Kältemittelverdichter (1) nach einem der Anspruch Ansprüche 1 bis 2, **dadurch gekennzeichnet, dass** die Freistellungen (8) nach außen hin offen sind.

4. Kältemittelverdichter (1) nach einem der Ansprüche 1 bis 3, **dadurch gekennzeichnet, dass** die Freistellungen (8) regelmäßig, vorzugsweise mit gleichem Winkelabstand (14) zueinander, um eine Längsachse (13) des Verbindungsbauteils (4) herum angeordnet sind.

5. Kältemittelverdichter (1) nach Anspruch 4, **dadurch gekennzeichnet, dass** die Freistellungen (8) einen Winkelabstand (14) von 3° bis 45°, vorzugsweise von 5° bis 30° zueinander aufweisen.

6. Kältemittelverdichter (1) nach einem der Ansprüche 4 bis 5, **dadurch gekennzeichnet, dass** die Freistellungen (8) jeweils einen Winkelbereich (15) von 1° bis 10°, vorzugsweise von 1° bis 4° überdecken.

7. Kältemittelverdichter (1) nach einem der Ansprüche 1 bis 6, **dadurch gekennzeichnet, dass** das Verbindungsbauteil (4) mindestens eine weitere Freistellung (7) aufweist, die zwischen dem inneren Element (5) und dem äußeren Element (6) angeordnet ist, wobei die mindestens eine weitere Freistellung (7) vorzugsweise in einer axialen Richtung (9) eine Erstreckung (10) aufweist, die kleiner ist als eine Erstreckung (11) des äußeren Elements (6) in axialer Richtung (9).

8. Kältemittelverdichter (1) nach Anspruch 7, **dadurch gekennzeichnet, dass** mehrere weitere Freistellungen (7) vorgesehen sind, die in einer normal auf eine axiale Richtung (9) stehenden Schnittebene durch Stege (16) des äußeren Elements (6) voneinander getrennt sind.

9. Kältemittelverdichter (1) nach Anspruch 8, **dadurch gekennzeichnet, dass** die weiteren Freistellungen (7) in der Schnittebene regelmäßig, vorzugsweise mit gleichem Winkelabstand (17) zueinander, um eine Längsachse (13) des Verbindungsbauteils (4) herum angeordnet sind.

10. Kältemittelverdichter (1) nach Anspruch 9, **dadurch gekennzeichnet, dass** die weiteren Freistellungen (7) in der Schnittebene einen Winkelabstand (17) von 3° bis 45°, vorzugsweise von 5° bis 30° zueinander aufweisen.

11. Kältemittelverdichter (1) nach einem der Ansprüche 9 bis 10, **dadurch gekennzeichnet, dass** die weiteren Freistellungen (7) in der Schnittebene jeweils einen Winkelbereich (25) von 10° bis 40° überdecken.

12. Kältemittelverdichter (1) nach einem der Ansprüche 7 bis 11, **dadurch gekennzeichnet, dass** die mindestens eine weitere Freistellung (7) in einem unbelasteten Zustand des Verbindungsbauteils (4) frei ist und in einem belasteten Zustand des Verbindungsbauteils (4) zumindest abschnittsweise vom äußeren Element (6) ausgefüllt ist.

13. Kältemittelverdichter (1) nach einem der Ansprüche 1 bis 12, **dadurch gekennzeichnet, dass** zur Befestigung des mindestens einen Verbindungsbauteils (4) am Gehäuse (2) ein Anbaufuß (18) vorgesehen ist, welcher das äußere Element (6) in einem Verbindungsabschnitt (19) des äußeren Elements (6) umgibt, wobei der Anbaufuß (18) vorzugsweise in einer Nut (20) des äußeren Elements (6) aufgenommen ist.

14. Kältemittelverdichter (1) nach Anspruch 13 und nach einem der Ansprüche 7 bis 12, **dadurch gekennzeichnet, dass** der Verbindungsabschnitt (19) mit der mindestens einen weiteren Freistellung (7) in axialer Richtung (9) überlappt.

15. System umfassend einen Kältemittelverdichter (1) nach einem der Ansprüche 1 bis 14 sowie eine mit dem Kältemittelverdichter (1) in Wirkverbindung stehende Vorrichtung, vorzugsweise ein Kühlgerät (3), wobei die Vorrichtung eine Montageplatte (28) umfasst, an welche das Gehäuse (2) des Kältemittelverdichters (1) mit dem mindestens einen Verbindungsbauteil (4) angebunden ist.

## Claims

1. Refrigerant compressor (1) comprising a hermetically sealed housing (2) and a drive unit arranged in the interior of the housing (2), comprising a piston-cylinder unit for cyclical compression of a refrigerant and an electric motor for driving the piston-cylinder unit, wherein the refrigerant compressor (1) additionally comprises at least one connecting component (4) for connecting the housing (2) to a device operatively connected to the refrigerant compressor (1), preferably a mounting plate (28) of a refrigeration appliance (3), wherein the connecting component (4) comprises an inner element (5) and an outer element (6) surrounding the inner element (5), wherein the inner element (5) has a higher rigidity than the outer element (6), wherein recesses (8) running in transverse directions (27) are provided in the outer element (6), wherein the transverse directions (27) are directed from an outer envelope surface (26) of the outer element (6) to the inner element (5), **characterized in that** the recesses (8) pass through the entire outer element (6) in an axial direction (9).

2. Refrigerant compressor (1) according to Claim 1, **characterized in that** the recesses are constructed as slots (8).

3. Refrigerant compressor (1) according to one of Claims 1 to 2, **characterized in that** the recesses (8) are open to the outside.

4. Refrigerant compressor (1) according to one of Claims 1 to 3, **characterized in that** the recesses (8) are arranged regularly, preferably with an equal angular spacing (14) from one another, about a longitudinal axis (13) of the connecting component (4).

5. Refrigerant compressor (1) according to Claim 4, **characterized in that** the recesses (8) have an angular spacing (14) from one another of 3° to 45°, preferably 5° to 30°.

6. Refrigerant compressor (1) according to one of Claims 4 to 5, **characterized in that** the recesses (8) each cover an angular region (15) of 1° to 10°, preferably 1° to 4°.

7. Refrigerant compressor (1) according to one of Claims 1 to 6, **characterized in that** the connecting component (4) has at least one additional recess (7), which is arranged between the inner element (5) and the outer element (6), wherein the at least one additional recess (7) preferably has an extent (10) in an axial direction (9) that is smaller than an extent (11) of the outer element (6) in the axial direction (9).

8. Refrigerant compressor (1) according to Claim 7, **characterized in that** a plurality of additional recesses (7) are provided, which are separated from one another by ridges (16) of the outer element (6) in a section plane perpendicular to an axial direction (9).

9. Refrigerant compressor (1) according to Claim 8, **characterized in that** the additional recesses (7) are arranged in the section plane regularly, preferably with an identical angular spacing (17) from one another, about a longitudinal axis (13) of the connecting component (4).

10. Refrigerant compressor (1) according to Claim 9, **characterized in that** the additional recesses (7) have an angular spacing (17) of 3° to 45°, preferably 5° to 30°, from one another in the section plane.

11. Refrigerant compressor (1) according to one of Claims 9 to 10, **characterized in that** the additional recesses (7) in the section plane each cover an angular region (25) of 10° to 40°.

12. Refrigerant compressor (1) according to one of Claims 7 to 11, **characterized in that** the at least one additional recess (7) is unoccupied in an unstressed condition of the connecting component (4) and is occupied at least in certain regions by the outer element (6) in a stressed condition of the connecting component (4).

13. Refrigerant compressor (1) according to one of Claims 1 to 12, **characterized in that** an attachment foot (18) that surrounds the outer element (6) in a connecting portion (19) of the outer element (6) is provided on the housing (2) for mounting the at least one connecting component (4), wherein the attachment foot (18) preferably is received in a groove (20) of the outer element (6).

14. Refrigerant compressor (1) according to Claim 13 and according to one of Claims 7 to 12, **characterized in that** the connecting portion (19) overlaps the at least one additional recess (7) in the axial direction (9).

15. System, comprising a refrigerant compressor (1) according to one of Claims 1 to 14, and a device, preferably a refrigerating appliance (3), operatively connected to the refrigerant compressor (1), wherein the device comprises a mounting plate (28), to which the housing (2) of the refrigerant compressor (1) is connected by the at least one connecting component (4).

## Revendications

1. Compresseur à réfrigérant (1) comprenant un boîtier (2) hermétique et une unité d'entraînement disposée à l'intérieur du boîtier (2), avec une unité de piston et cylindre pour la compression cyclique d'un réfrigérant et avec un moteur électrique pour entraîner l'unité de piston et cylindre, lequel compresseur à réfrigérant (1) comprend en outre au moins un composant d'assemblage (4) pour la liaison du boîtier (2) à un dispositif en liaison active avec le compresseur à réfrigérant (1), de préférence une plaque de montage (28) d'un appareil frigorifique (3), dans lequel le composant d'assemblage (4) comprend un élément intérieur (5) et un élément extérieur (6) entourant l'élément intérieur (5), l'élément intérieur (5) présentant une plus grande rigidité que l'élément extérieur (6), l'élément extérieur (6) étant muni de dégagements (8) orientés dans des directions transversales (27), les directions transversales (27) menant d'une surface d'enveloppe extérieure (26) de l'élément extérieur (6) à l'élément intérieur (5), **caractérisé en ce que** les dégagements (8) traversent tout l'élément extérieur (6) dans une direction axiale (9).

2. Compresseur à réfrigérant (1) selon la revendication 1, **caractérisé en ce que** les dégagements sont conformés comme des fentes (8).

3. Compresseur à réfrigérant (1) selon l'une des revendications 1 à 2, **caractérisé en ce que** les dégagements (8) sont ouverts vers l'extérieur.

4. Compresseur à réfrigérant (1) selon l'une des revendications 1 à 3, **caractérisé en ce que** les dégagements (8) sont disposés régulièrement, de préférence avec un écart angulaire (14) égal les uns par rapport aux autres, autour d'un axe longitudinal (13) du composant d'assemblage (4).

5. Compresseur à réfrigérant (1) selon la revendication 4, **caractérisé en ce que** les dégagements (8) présentent un écart angulaire (14) les uns par rapport aux autres de 3° à 45°, de préférence de 5° à 30°.

6. Compresseur à réfrigérant (1) selon l'une des revendications 4 à 5, **caractérisé en ce que** les dégagements (8) couvrent chacun une plage d'angle (15) de 1° à 10°, de préférence de 1° à 4°.

7. Compresseur à réfrigérant (1) selon l'une des revendications 1 à 6, **caractérisé en ce que** le composant d'assemblage (4) comprend au moins un autre dégagement (7) qui est disposé entre l'élément intérieur (5) et l'élément extérieur (6), l'au moins un autre dégagement (7) présentant de préférence, dans une direction axiale (9), une étendue (10) plus petite que l'étendue (11) de l'élément extérieur (6) dans la direction axiale (9).

8. Compresseur à réfrigérant (1) selon la revendication 7, **caractérisé en ce qu'**il est prévu plusieurs autres dégagements (7) qui sont séparés les uns des autres, dans un plan de coupe perpendiculaire à une direction axiale (9), par des barrettes (16) de l'élément extérieur (6).

9. Compresseur à réfrigérant (1) selon la revendication 8, **caractérisé en ce que** les autres dégagements (7) sont disposés régulièrement dans le plan de coupe, de préférence avec le même écart angulaire (17), autour d'un axe longitudinal (13) du composant d'assemblage (4).

10. Compresseur à réfrigérant (1) selon la revendication 9, **caractérisé en ce que** les autres dégagements (7) présentent dans le plan de coupe un écart angulaire (17) de 3° à 45°, de préférence de 5° à 30°, les uns par rapport aux autres.

11. Compresseur à réfrigérant (1) selon l'une des revendications 9 à 10, **caractérisé en ce que** les autres dégagements (7) couvrent chacun une plage d'angle (25) de 10° à 40° dans le plan de coupe.

12. Compresseur à réfrigérant (1) selon l'une des revendications 7 à 11, **caractérisé en ce que** l'au moins un autre dégagement (7) est dégagé dans l'état hors charge du composant d'assemblage (4) et rempli au moins en partie par l'élément extérieur (6) dans l'état en charge du composant d'assemblage (4).

13. Compresseur à réfrigérant (1) selon l'une des revendications 1 à 12, **caractérisé en ce qu'**afin de fixer l'au moins un composant d'assemblage (4) sur le boîtier (2), il est prévu un pied de montage (18) qui entoure l'élément extérieur (6) dans une partie d'assemblage (19) de l'élément extérieur (6), le pied de montage (18) étant de préférence reçu dans une rainure (20) de l'élément extérieur (6).

14. Compresseur à réfrigérant (1) selon la revendication 13 et selon l'une des revendications 7 à 12, **caractérisé en ce que** la partie d'assemblage (19) recouvre l'au moins un autre dégagement (7) dans la direction axiale (9).

15. Système comprenant un compresseur à réfrigérant (1) selon l'une des revendications 1 à 14 ainsi qu'un dispositif en liaison active avec le compresseur à réfrigérant (1), de préférence un appareil frigorifique (3), dans lequel le dispositif comprend une plaque de montage (28) à laquelle le boîtier (2) du compresseur à réfrigérant (1) est relié avec au moins un composant d'assemblage (4).
